# EUROPEAN PATENT APPLICATION

(11) **EP 1 193 643 A1**
(43) Date of publication of application: **03.04.2002**
(21) Application number: 01306835.8
(22) Date of filing: 10.08.2001
(51) Int. Cl.: G06K 11/18

(54) **Control device**

(30) Priority: 28.09.2000 GB 0023801
(71) Applicant: Nokia Corporation, 02150 Espoo (FI)
(72) Inventor: Wingett, Gary, Southampton, Hampshire SO40 8HZ (GB); Barrowclough, Philip, Basingstoke, Hampshire RG22 4DD (GB)
(74) Representative: Read, Matthew Charles

(57) **Abstract**

A control device for electronic apparatus, such as a mobile telephone handset, comprises a keymat (15) having a navigation key (19) with a magnet (22) mounted so as to move with the key. A user may change the attitude of the key by tilting or deforming the key and magnetic field sensing means (26a, 26c) detects the attitude of the key. This may be used to control a pointer displayed on a screen.

## Description

The present invention relates to a control device particularly but not exclusively for a mobile telephone handset or digital communicator handset.

Portable electronic apparatus are increasingly able to support powerful software applications with sophisticated user interfaces. For example, palm-top computers, mobile telephone handsets, personal digital assistants (PDAs) and digital communicator handsets can run browser software which enable a user to navigate content on web pages through the selection of hypertext links.

Conventional mobile telephone handsets have an alphanumeric keypad comprising a set of dual-state keys arranged in a grid pattern. Although such a keypad is appropriate for entering textual and numeric data, it is not particularly suited to navigating a web page because movement of a focus is restricted to discrete steps and constrained to the orthogonal directions defined by the grid pattern. Dual-state keys usually operate by closing a contact, though contactless arrangements may be used. For example, US 4,203,013 discloses an alphanumeric keyboard having dual-state keys, in which a Hall sensor is used to detect whether a key is depressed.

Control devices can be incorporated into the portable electronic apparatus in order to provide an additional user input means. These devices include strain gauge, carbon pill and Hall effect types of joystick. However, each of these types of joystick have their drawbacks and there are problems incorporating them into portable electronic apparatus such as a mobile telephone handset, not least because of the space they occupy.

The Hall-effect type of joystick is typical in this respect, an example of which may be found in a user control of a Sega Dreamcast video game console. The joystick is chiefly constructed from plastic and comprises a thumb-operated actuator arranged at the end of a pivoted shaft to which a magnet is attached. Movement of the magnet is detected by a polar array of Hall elements arranged on a supporting substrate. The pivot takes the form of a ball and socket. Several pieces must be assembled to form the finished joystick which is a few cubic centimetres in size. This construction does not lend itself to being scaled down in size and, even if it were scaled down, to being integrated into the housing of a mobile telephone handset. Attempts to incorporate a Hall effect joystick into portable electronic apparatus have been made. For example, US 5,982,355 discloses a remote control unit having a Hall effect type joystick. Nevertheless, the joystick is an adjunct to the unit and is not been incorporated into the body of the unit to a satisfactory degree, unlike a Hall effect dual-state key which is also disclosed.

The present invention seeks to provide an improved control device, in particular one suited for integration into portable electronic apparatus such as a mobile telephone handset.

According to the present invention there is provided control device for electronic apparatus comprising a keymat having a key for manipulation by a user so as to change its attitude with a magnet mounted so as to move with the key and magnetic field sensing means spaced therefrom for detecting the attitude of the key.

This has the advantage that the control device is easier to fabricate because it has fewer parts and is incorporated into the keymat.

The key may be configured to tilt or deform.

The keymat may be flexible, made of rubber and may be moulded. The keymat and key may be unitary.

This has the advantage that it helps prevents ingress of fluid and dirt into the control device and the rest of the electronic apparatus.

The key may have a cap and may comprise a recess for receiving the magnet. The key may be substantially disc shaped and the magnet may be substantially axially disposed.

The key may include a pivot, such as a stub, about which it may tilt and the magnetic field sensing means may be arranged about the axis of the pivot, may be disposed on a substrate and may comprise two elements disposed on the substrate either side of the axis of the pivot. The two elements may generate first and second signals which are differentially processed. The magnetic field sensing means may be disposed subjacent the key.

The magnetic field sensing means may comprise a plurality of magnetic field sensors and may comprise a Hall effect sensor.

The magnet may be a permanent magnet. The magnet may be a magnetic layer coating.

The key may be configured to sit substantially parallel to a substrate supporting the magnetic field sensing means when not manipulated by the user and to tilt relative to the substrate when manipulated by the user.

The keymat may further comprises dual-state keys configured to be uniaxially operable.

The device may further comprise a switch, such as a carbon pill, configured to detect pressure applied substantially normally and centrally to the key.

According to the present invention there is also provided electronic apparatus incorporating said control device. The electronic apparatus may be portable and may be a mobile telephone or a communicator.

According to the present invention there is provided a method of fabricating a control device for electronic apparatus comprising providing a keymat having a key with a magnet disposed therein for manipulation by a user and magnetic field sensing means for detecting movement of the key.

The providing of the keymat may comprise moulding the keymat from mouldable material.

An embodiment of the present invention will now be described, by way of example, with reference to the accompanying drawings, in which:
Figure 1 is a perspective view of a mobile telephone handset;
Figure 2 is a schematic diagram of telephone circuitry;
Figure 3 is a perspective view of an embodiment of the present invention;
Figure 4 is an exploded view of the embodiment shown in Figure 3 and
Figure 5 is a cross-sectional view taken along the line A-A' as shown in Figure 3.

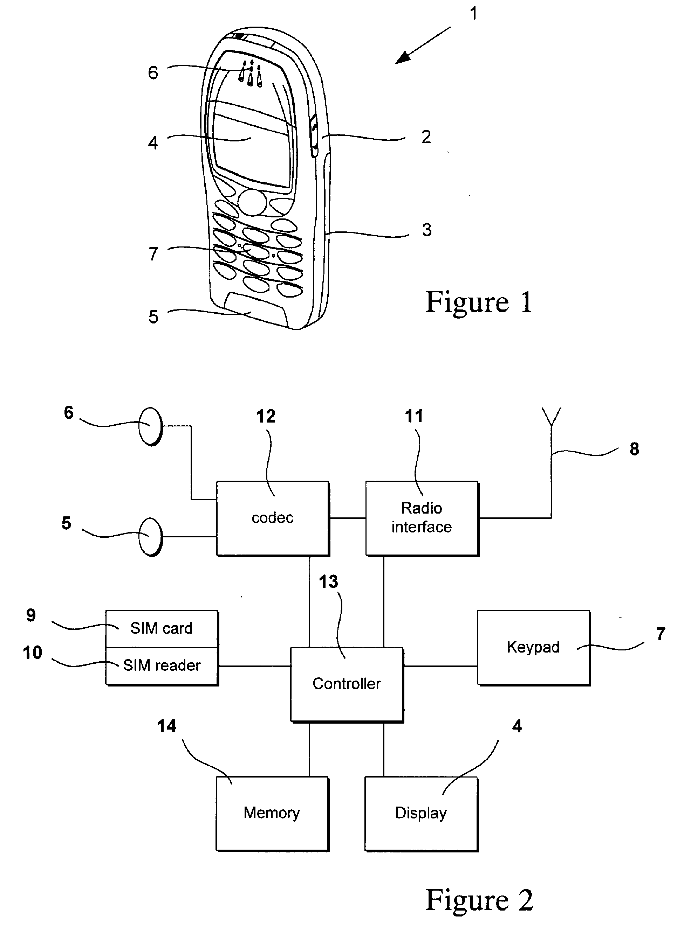

Referring to Figures 1 and 2, a mobile telephone handset 1 comprises a case 2, a battery 3, a liquid crystal display (LCD) panel 4, a microphone 5, ear-piece 6, a keypad 7, antenna 8, subscriber identification module (SIM) card 9 and SIM card reader 10. The mobile telephone circuitry includes radio interface circuitry 11, codec circuitry 12, controller 13 and memory 14. Individual circuits and elements are of a type well known in the art, for example in the Nokia range of mobile telephones.

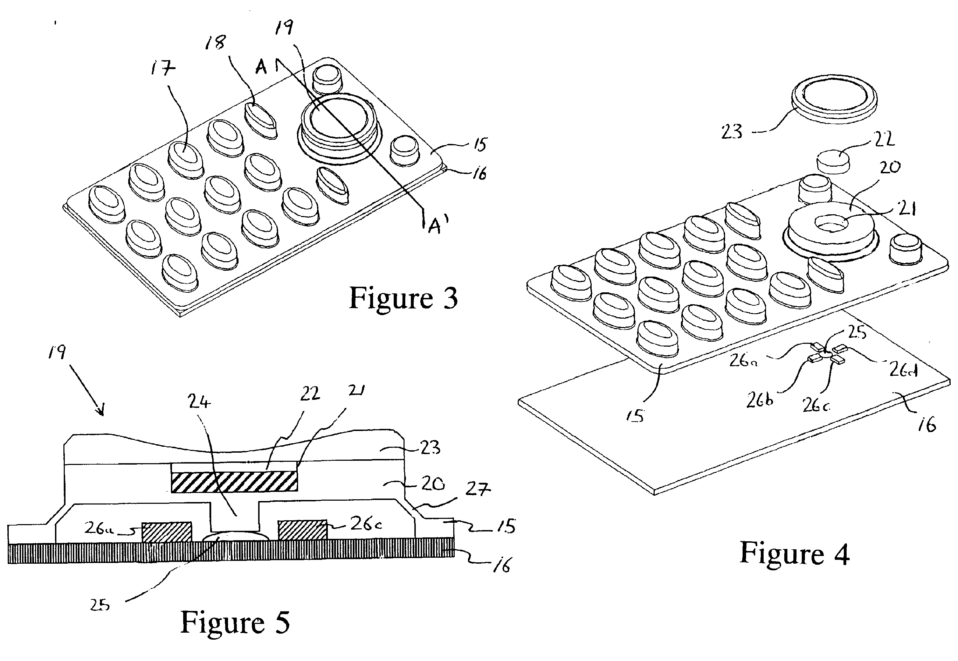

Referring to Figure 3, the keypad 7 comprises a keymat 15 made of resilient material, such as rubber, supported by a printed circuit board (PCB) 16. The keymat 15 includes alphanumeric buttons 17, function keys 18, such as 'call' and 'end' keys and a 'menu' key and the navigation key 19.

Referring to Figures 4 and 5, the navigation key 19 comprises a ring-shaped rubber base 20, which in this example forms an integral part of the keymat 15. The base 20 has a recess 21 in its centre for receiving a permanent magnet 22 and is covered with hard cap 23, which reduces wear of the navigation key 19 and holds the magnet 22 is place. It will be appreciated that the magnet may be held in place using other methods, for example by glue or by encapsulation. The underside of the base 20 has an axially mounted stub 24, which is supported by a dome 25 mounted on the PCB 16. The stub 24 and dome 25 serve as a pivot about which the navigation key 19 may tilt. It will be appreciated that the dome 25 may be made of metal or plastic and may incorporate a switch, such as a carbon pill. First, second, third and fourth Hall sensors 26a, 26b, 26c, 26d are mounted on the PCB 16 in a compass-point arrangement around the dome 25. The sensors 26 each detect a local magnetic field, which is a function of the separation between the magnet 22 and the respective sensor 26 and orientation of the magnet 22. Each Hall effect sensor 26 carries current and a Hall voltage is generated perpendicular to the direction of the magnetic field and the current. Hall voltages are measured and processed in a manner well known *per se.*

The navigation key 19 is controlled by changing its attitude. In this example, it is tilted by applying off-centre pressure to its face. The magnet 22 is displaced from its equilibrium position and so the magnetic field measured locally at each of the sensors 26 changes. The navigation key 21 may be tilted in any direction within the horizontal plane to varying degrees.

A bridging membrane 27 between the navigation key 19 and the surrounding keypad 15 resists tilting of the navigation key 19. In this example, the bridging membrane 27, the base 20 and the keymat 15 form a unitary structure. As off-centre pressure is applied to the face of navigation key 19, the base 20 is tilted and the bridging membrane 27 is stretched. When pressure is removed, the bridging membrane 27 rights the navigation key 19 so that it rests horizontally. It will be appreciated that the amount of movement and the force necessary to actuate the key may be modified according to the configuration and properties of the resilient material.

By tilting the navigation key 19, the user is able to move an object, such as a cursor (not shown), freely around the display 4. Movement is not limited to orthogonal directions, such as up, down, left and right. Furthermore, the degree of tilt may be detected, thus allowing analogue control. For example, gentle pressure may cause the cursor to move slowly, while greater pressure makes it move more quickly. If the dome 25 incorporates a switch, then selection of an object in focus may be effected by applying pressure to the centre of the navigation key 19. Alternatively, another key 17, 18 could be pressed.

The navigation key 19 shown in Figures 3, 4 and 5 has several advantages over prior art control devices. It is easily incorporated into a keymat of a mobile telephone handset, thus making fabrication much simpler. Furthermore, fewer components are used. These reduce assembly costs. In addition, the size of the navigation key 19 can be scaled down. In particular, the thickness of the device from the surface of the navigation key 19 to the PCB 16 is reduced. Moreover, if the navigation key 19 is moulded into the keymat 15, then the arrangement prevents ingress of fluid and dirt.

It will be appreciated that the invention can be used in relation to any sort of electronic apparatus, both portable and non-portable. This may include mobile telephone handsets and lap top computers. It may also be used in remote control units for electronic apparatus such as television sets, multimedia set-top boxes and audio equipment. The keymat 15 may be of a plastic-on-film construction. The keymat may be formed by known moulding techniques. The attitude of the navigation key may be changed by deforming all or part of the key. The key may have more than one magnet. The magnet may be a magnetic layer coating. The PCB may be flexible.

## Claims

1. A control device for electronic apparatus comprising a keymat (15) having a key (19) for manipulation by a user so as to change its attitude with a magnet (22) mounted so as to move with the key and magnetic field sensing means (26a, 26c) spaced therefrom for detecting the attitude of the key.

2. A device according to claim 1, wherein the key is configured to tilt.

3. A device according to claim 1 or 2, wherein the key is configured to deform.

4. A device according to any preceding claim, wherein the keymat is flexible.

5. A device according to claim 4, wherein the keymat is made of rubber.

6. A device according to any preceding claim, wherein the keymat is moulded.

7. A device according to any preceding claim, wherein the keymat and key are unitary.

8. A device according to any preceding claim, further comprising a cap on the key.

9. A device according to any preceding claim, wherein the key comprises a recess for receiving the magnet.

10. A device according to any preceding claim, wherein the key is substantially disc shaped.

11. A device according to claim 10, wherein the magnet is substantially axially disposed.

12. A device according to any preceding claim, wherein the key includes a pivot about which it may tilt.

13. A device according to claim 12, wherein the pivot comprises a stub.

14. A device according to claim 12 or 13 wherein the magnetic field sensing means is arranged about the axis of the pivot.

15. A device according to claim 14 wherein the magnetic field sensing means is disposed on a substrate.

16. A device according to claim 15 wherein the magnetic field sensing means comprises two elements disposed on the substrate either side of the axis of the pivot.

17. A device according to claim 16 wherein the two elements generate first and second signals which are differentially processed.

18. A device according to any preceding claim, wherein the magnetic field sensing means is disposed subjacent the key.

19. A device according to any preceding claim, wherein the magnetic field sensing means comprises a plurality of magnetic sensors.

20. A device according to any preceding claim, wherein the magnetic field sensing means comprises a Hall effect sensor.

21. A device according to any preceding claim, wherein the magnet is a permanent magnet.

22. A device according to any preceding claim, wherein the magnet is a magnetic layer coating.

23. A device according to any preceding claim, wherein the key is configured to sit substantially parallel to a substrate supporting the magnetic field sensing means when not manipulated by the user.

24. A device according to any preceding claim, wherein the key is configured to tilt relative to a substrate supporting the magnetic field sensing means when manipulated by the user.

25. A device according to any preceding claim, wherein the keymat further comprises dual-state keys configured to be uniaxially operable.

26. A device according to any preceding claim, further comprising a switch configured to detect pressure applied substantially normally and centrally to the key.

27. A device according to claim 26 wherein the switch comprises a carbon pill.

28. Electronic apparatus incorporating said control device according to any preceding claim.

29. Electronic apparatus according to claim 28 which is portable.

30. A mobile telephone incorporating said control device according to any one of claims 1 to 27.

31. An electronic communicator incorporating said control device according to any one of claims 1 to 27.

32. A method of fabricating a control device for electronic apparatus comprising providing a keymat having a key with a magnet disposed therein for manipulation by a user and magnetic field sensing means for detecting movement of the key.

33. A method according to claim 32, wherein the providing of the keymat comprises moulding the keymat from mouldable material.
